# EUROPEAN PATENT APPLICATION

(11) **EP 4 130 691 A1**
(43) Date of publication of application: **08.02.2023**
(21) Application number: 22789826.9
(22) Date of filing: 25.05.2022
(51) Int. Cl.: G01H 11/08, G01H 1/00, G01H 13/00, G01N 29/04

(54) **DATA CLASSIFICATION DEVICE AND METHOD**

(30) Priority: 25.05.2021 KR 20210067260
(71) Applicant: Gentle Energy Corp., Seoul 04147 (KR)
(72) Inventor: PARK, Hyung Jun, Seoul 04147 (KR); NAM, Sang Joon, Seoul 04147 (KR); SONG, Charles Kiseok, Seoul 04147 (KR)
(74) Representative: Hoffmann Eitle
(86) International application number: PCT/KR2022/007423
(87) International publication number: WO 2022/250449

(57) **Abstract**

The present disclosure relates to a data classification apparatus and method for providing expanded information obtained by analyzing data collected from an Internet-of-things (IoT) sensor. A data classification method according to an embodiment of the present disclosure includes collecting time-series sensor data from an Internet-of-Things (IoT) sensor that is provided in or installable in a machine, generating first processed data in which the time-series sensor data is highlighted, generating, based on the first processed data, second processed data for determining a state of the machine, and classifying the state of the machine from the first processed data, based on the second processed data, wherein the state of the machine includes one or more of a first state in which the machine is active and the first processed data is included in a non-pattern section in which no pattern is visualized over a certain section, and a second state in which the machine is active and the first processed data is included in a pattern section in which an arbitrary pattern is visualized over a certain section.

## Description

### TECHNICAL FIELD

The present disclosure relates to a data classification apparatus and method for providing expanded information obtained by analyzing data collected from an Internet-of-things (IoT) sensor.

### BACKGROUND ART

In general, a computerized numerical control (CNC) machine tool is a numerical control (NC) machine tool with a built-in high-performance computing device, and operates in such a manner that data, such as machining shapes, machining conditions, or machining operations, is automatically programmed with a computer and converted into NC data, and then the NC data is converted into pulse signals. With the recent development of Internet-of-things (IoT) technology, CNC machine tools are equipped with various types of sensors and communication modules to enable remote monitoring or control.

The related art described above is technical information that the inventor(s) of the present disclosure has achieved to derive the present disclosure or has achieved during the derivation of the present disclosure, and thus, it cannot be considered that the related art has been published to the public before the filing of the present disclosure.

### PRIOR ART DOCUMENTS

### PATENT DOCUMENTS

(Patent Document 1) Korean Patent Publication No. 10-0952619 (published on April 6, 2010)

### DESCRIPTION OF EMBODIMENTS

### TECHNICAL PROBLEM

The present disclosure provides a data classification apparatus and method for classifying a state of a machine by analyzing data collected from an Internet-of-things (IoT) sensor provided in or installable in the machine.

The present disclosure provides a data classification apparatus and method that use an analysis model belonging to the unsupervised learning category to analyze data collected from an loT sensor provided in or installable in a machine, and thus are applicable to heterogeneous data without requiring separate training data and training period.

The present disclosure provides a data classification apparatus and method with versatility, which are applicable to a micro data structure collected from an loT sensor.

Technical objects of the present disclosure are not limited to the foregoing, and other unmentioned objects or advantages of the present disclosure would be understood from the following description and be more clearly understood from the embodiments of the present disclosure. In addition, it would be appreciated that the objects and advantages of the present disclosure can be implemented by means provided in the claims and a combination thereof.

### SOLUTION TO PROBLEM

According to an embodiment of the present disclosure, a data classification method performed by a processor of a data classification apparatus may include collecting time-series sensor data from an Internet-of-Things (IoT) sensor that is provided in or installable in a machine, generating first processed data in which the time-series sensor data is highlighted, generating, based on the first processed data, second processed data for determining a state of the machine, and classifying the state of the machine from the first processed data, based on the second processed data, wherein the state of the machine includes one or more of a first state in which the machine is active and the first processed data is included in a non-pattern section in which no pattern is visualized over a certain section, and a second state in which the machine is active and the first processed data is included in a pattern section in which an arbitrary pattern is visualized over a certain section.

According to an embodiment of the present disclosure, a data classification apparatus may include a processor, and a memory operatively coupled to the processor and storing at least one piece of code to be executed by the processor, wherein the memory stores code that, when executed by the processor, causes the processor to collect time-series sensor data from an loT sensor that is provided in or installable in a machine, generate first processed data in which the time-series sensor data is highlighted, generate, based on the first processed data, second processed data for determining a state of the machine, and classify the state of the machine from the first processed data, based on the second processed data, and the state of the machine includes one or more of a first state in which the machine is active and the first processed data is included in a non-pattern section in which no pattern is visualized over a certain section, and a second state in which the machine is active and the first processed data is included in a pattern section in which an arbitrary pattern is visualized over a certain section.

In addition, other methods and systems for implementing the present disclosure, and a computer-readable recording medium having recorded thereon a computer program for executing the methods may be further provided.

Other aspects, features, and advantages other than those described above will be apparent from the following drawings, claims, and detailed description.

### ADVANTAGEOUS EFFECTS OF DISCLOSURE

According to the present disclosure, it is possible to provide a data classification apparatus and method for classifying data with high classification accuracy in classifying a state of a machine by analyzing data collected from an loT sensor provided in or installable in the machine.

In addition, the present disclosure may provide a data classification apparatus and method that use an analysis model belonging to the unsupervised learning category to analyze data collected from an loT sensor provided in or installable in a machine, and thus are applicable to heterogeneous data without requiring separate training data and training period.

In addition, the present disclosure may provide a data classification apparatus and method with versatility applicable to a micro data structure collected from an loT sensor and thus capable of classifying substantially available data even with a computational device with relatively low performance, thereby reducing costs.

Effects of the present disclosure are not limited to the foregoing, and other unmentioned effects would be clearly understood by those skilled in the art from the following description.

### BRIEF DESCRIPTION OF DRAWINGS

FIG. 1 is a diagram of an example of a data classification environment according to an embodiment.
FIG. 2 is a block diagram schematically illustrating a configuration of a data classification apparatus according to an embodiment.
FIG. 3 is a block diagram schematically illustrating a configuration of a classification processing unit in the data classification apparatus of FIG. 2.
FIGS. 4 to 11 are graphs for describing data classification according to an embodiment.
FIG. 12 is a block diagram schematically illustrating a configuration of a data classification apparatus according to another embodiment.
FIGS. 13 and 14 are flowcharts for describing a data classification method according to an embodiment.

### MODE OF DISCLOSURE

Advantages and features of the present disclosure and a method for achieving them will be apparent with reference to embodiments of the present disclosure described below together with the attached drawings. The present disclosure may, however, be embodied in many different forms and should not be construed as being limited to the embodiments set forth herein, and all changes, equivalents, and substitutes that do not depart from the spirit and technical scope of the present disclosure are encompassed in the present disclosure. These embodiments are provided such that the present disclosure will be thorough and complete, and will fully convey the concept of the present disclosure to those of ordinary skill in the art. In describing the present disclosure, detailed explanations of the related art are omitted when it is deemed that they may unnecessarily obscure the gist of the present disclosure.

Terms used herein are for describing particular embodiments and are not intended to limit the scope of the present disclosure. The singular expression also includes the plural meaning as long as it is not inconsistent with the context. As used herein, terms such as "comprises," "includes," or "has" specify the presence of stated features, numbers, stages, operations, components, parts, or a combination thereof, but do not preclude the presence or addition of one or more other features, numbers, stages, operations, components, parts, or a combination thereof. Terms such as "first" or "second" may be used to describe various elements, but the elements should not be limited by the terms. These terms are only used to distinguish one element from another element.

In addition, as used herein, the term "unit" may be a hardware component such as a processor or a circuit, and/or a software component executed by a hardware component such as a processor.

Hereinafter, embodiments of the present disclosure are described in detail with reference to the accompanying drawings, and the same or corresponding components are denoted by the same reference numerals when described with reference to the accompanying drawings, and thus redundant descriptions thereof are omitted.

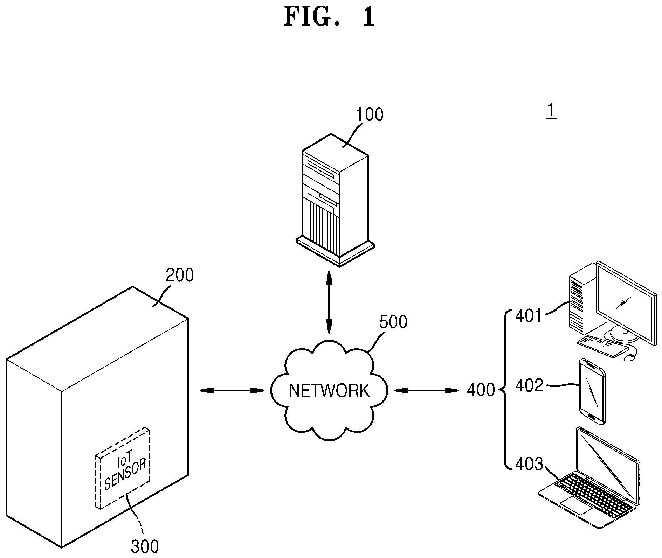

FIG. 1 is a diagram of an example of a data classification environment according to an embodiment. Referring to FIG. 1, a data classification environment 1 may include a data classification apparatus 100, a machine 200, an Internet-of-things (IoT) sensor 300, a user terminal 400, and a network 500.

The data classification apparatus 100 may process data collected from the loT sensor 300 provided in or installable in the machine 200, in order to more efficiently analyze the data to identify the meaning of the data. The data classification apparatus 100 may classify expanded information related to the machine 200 by analyzing the data that is simply collected from the loT sensor 300 provided in or installable in the machine 200. Here, the expanded information related to the machine 200 may include, for example, state information of the machine 200.

In the present embodiment, the machine 200 may include a metalworking machine for shaping a metal object based on an electric motor. However, the present embodiment is not limited thereto, and any machine provided with the loT sensor 300 therein or thereout and capable of communicating with the data classification apparatus 100 may be applied to the present embodiment.

In the present embodiment, the loT sensor 300 is a sensor applied to an loT environment, and may be provided in the machine 200 to sense data related to the machine 200 and transmit the data to the data classification apparatus 100. The loT sensor 300 may include a current sensor, a vibration sensor, an illuminance sensor, a temperature sensor, a proximity sensor, etc. In the present embodiment, for convenience of description, it is assumed that the loT sensor 300 is a current sensor.

In the present embodiment, states of the machine 200 classified by the data classification apparatus 100 may include a zeroth state, a first state, a second state, and 2-1 st to 2-3rd states.

The zeroth state may include a state in which the machine 200 is in an inactive period. Here, the inactive period may include a period during which the machine 200 is powered off. For example, assuming that the machine 200 is a mixer, the zeroth state may refer to a state in which the mixer is powered off. In the present embodiment, in contrast with the zeroth state, the first state, the second state, and the 2-1 st to 2-3rd states may include states included in an active period. Here, the active period may include a period during which the machine 200 is powered on.

The first state may refer to a state in which the machine 200 is active and first processed data to be described below is included in a non-pattern section in which no pattern is visualized over a certain section. That is, the first state may include a state in which the machine 200 is powered on and the machine 200 is not operating. For example, assuming that the machine 200 is a mixer, the first state may refer to a state before an operation button is pressed after the mixer is powered on.

The second state may refer to a state in which the machine 200 is active and the first processed data to be described below is included in a pattern section in which an arbitrary pattern is visualized over a certain section. That is, the second state may include a state in which the machine 200 is powered on and the machine 200 is operating. For example, assuming that the machine 200 is a mixer, the second state may refer to a state in which the mixer is powered on and then is operating as an operation button is pressed. Here, when the operation button of the mixer is pressed, an arbitrary pattern corresponding to the operation button may be generated.

The 2-1 st state may refer to a state included in a first pattern section in which an arbitrary pattern included in the second state repeats a preset number of times or more and thus is visualized. That is, the 2-1 st state may include a state in which the machine 200 is powered on and the machine 200 is operating normally. For example, assuming that the machine 200 is a mixer, the 2-1st state may refer to a state in which the mixer is operating as an operation button is pressed a preset number of times or more. Here, when the operation button of the mixer is pressed a preset number of times or more, an arbitrary pattern corresponding to the operation button may be generated a preset number of times or more. An arbitrary pattern generated a preset number of times or more may constitute the first pattern section.

The 2-2nd state may refer to a state included in a second pattern section in which an arbitrary pattern included in the second state repeats less than a preset number of times and thus is visualized. That is, the 2-2nd state may include a state in which the machine 200 is powered on and is operating abnormally, but no error has occurred in the machine 200. For example, assuming that the machine 200 is a mixer, the 2-2nd state may refer to a state in which the mixer is powered on and then an operation button is pressed to test whether the mixer operates normally. A time period and intensity for which the operation button is pressed to test the mixer is different from those to mix contents in the mix. Therefore, a pattern generated according to the operation button being pressed to test the mixer may be different from a pattern generated according to the operation button being pressed to mix the contents in the mixer. As described above, patterns generated when testing the mixer may constitute the second pattern section. As another example, assuming that the machine 200 is a metalworking machine, the 2-2nd state may refer to a state in which the metalworking machine is warmed up, cooled down, or tested.

The 2-3rd state may refer to a state in which the first processed data included in the first state is changed to a first pattern section by using a dynamic time warping (DTW) technique to be described below. That is, the 2-3rd state may include a case in which first processed data originally included in a non-pattern section is changed, through signal processing, to a first pattern section among pattern sections including the first pattern section and a second pattern section.

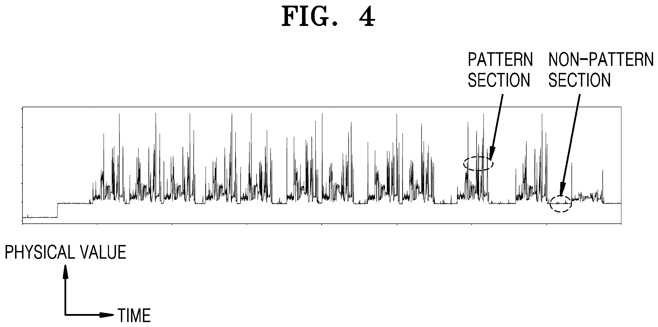

For example, assuming that the machine 200 is a mixer, the 2-3rd state may be described as follows. In a first process, the mixer may be operated by pressing an operation button to mix contents in the mixer. In the first process, a pattern section included in a first pattern section may be generated by an arbitrary pattern. In a second process, there may be a case in which, while the mixer is operating, the contents are caught by a blade of the mixer and thus the operation of the mixer is stopped for a certain time period, and the second process may be subdivided into a 2-0th process in which the mixer starts to operate until the contents are caught, a 2-1st process in which the caught contents are released, and a 2-2rd process in which the mixing is complete after the contents are released. As the operation of the mixer is stopped in the 2-1st process, a non-pattern section may be generated, and an arbitrary pattern section may be generated in each of the 2-0th and 2-2nd processes. When the same contents have been mixed to the same extent in the first process and the second process, a result of joining the patterns in the 2-0th and 2-2nd processes together may be identical to a pattern included in the first pattern section. Accordingly, when the DTW technique has been applied to signals of the 2-0th to 2-2nd processes and a pattern obtained by joining the patterns of the 2-0th and 2-2nd processes is included in the first pattern section, the non-pattern section of the second process may be changed to the first pattern section. As described above, a state in which the non-pattern section of the second process is changed to the first pattern section may be referred to as the 2-3rd state. The data classification apparatus 100 may collect time-series sensor data from the loT sensor 300 provided in or installable in the machine 200, in order to classify a state of the machine 200. Here, the time-series sensor data may include a timestamp indicating information about a time point at which the loT sensor 300 sensed the machine 200, and a physical value (e.g., a current value) obtained by the loT sensor 300 sensing the machine 200 at the time point of the timestamp. Also, the time-series sensor data may be referred to as original data. In the present embodiment, the original data may be represented by numerous points of physical values (y-axis) with respect to timestamps (x-axis), and a graph (FIG. 4) may be obtained by connecting these points. It may be seen that the graph is divided into pattern sections in each of which a certain pattern is visualized, and non-pattern sections in each of which no pattern is visualized.

The data classification apparatus 100 may estimate a baseline from the original data collected from the loT sensor 300. Here, the baseline may refer to a line that follows base physical values obtained by the loT sensor 300 sensing the machine 200 that is not operating in sections in which the machine 200 is powered on or off. In the present embodiment, the baseline may be included in a non-pattern section. The data classification apparatus 100 may identify, by using a result of estimating the baseline, the zeroth state included in a section in which the machine is inactive.

The data classification apparatus 100 may generate first processed data in which original data is highlighted. Here, highlighting of original data may include characterizing and thus clearly visualizing a pattern section in the original data that includes non-pattern sections and pattern sections. In order to generate the first processed data, the data classification apparatus 100 may generate sub-time-series sensor data by applying a baseline estimated from the original data. The data classification apparatus 100 may generate the first processed data in which a pattern section of the original data is highlighted, by removing noise from the sub-time-series sensor data.

The data classification apparatus 100 may generate second processed data for determining the state of the machine 200, based on the first processed data. Here, the second processed data may include a dynamic threshold for determining the first state and the second state with respect to the machine 200. The data classification apparatus 100 may generate the second processed data by using statistical characteristics and a higher-order differential (e.g., fourth-order differential) value with respect to the first processed data.

The data classification apparatus 100 may classify the state of the machine 200 from the first processed data, based on the second processed data. Here, states of the machine 200 may include one or more of the first state and the second state. For example, the data classification apparatus 100 may classify, as the first state, the state of the machine 200 in data in a first direction with respect to the second processed data. Also, the data classification apparatus 100 may classify, as the second state, the state of the machine 200 in data in a second direction that is apart by 180 degrees from the first direction with respect to the second processed data. In the present embodiment, the data classification apparatus 100 may classify the state of the machine 200 corresponding to the first processed data by using a first machine learning classification model that receives an input of the first processed data and the second processed data and classifies the state of the machine.

The data classification apparatus 100 may further perform a series of data processing operations to improve the classification accuracy and subdivide the classification. Here, the series of data processing operations may include processing for measuring a similarity of the first processed data included in the zeroth state to the second state. The data classification apparatus 100 may further classify the state of the machine 200 into one or more of the 2-1st state, the 2-2nd state, and the 2-3rd state, from the state of the machine 200 classified by using the first processed data included in the pattern section and the first machine learning classification model, based on a result of the measuring of the similarity. In the present embodiment, the data classification apparatus 100 may further classify the state of the machine 200 corresponding to the first processed data included in the zeroth state to the second state, by using a second machine learning classification model that receives an input of the state of the machine 200 classified by using the first processed data included in the pattern section and the first machine learning classification model, and further classifies the state of the machine.

In the present embodiment, an operation of classifying the state of the machine 200 into one or more of the zeroth state to the second state may be referred to as primary classification. In addition, an operation of additionally classifying the second state of the machine 200 into one or more of the 2-1st to 2-3rd states may be referred to as secondary classification.

The data classification apparatus 100 may apply the results of the primary classification and the secondary classification to the time-series sensor data that is the original data, to accurately classify which state of the machine 200 each piece of the time-series sensor data belongs to.

In the present embodiment, the data classification apparatus 100 may be implemented as an independent server, or a data classification function performed by the data classification apparatus 100 may be implemented as an application to be installed in the user terminal 400.

Also, the data classification apparatus 100 may be a database server that provides data necessary for applying various artificial intelligence algorithms.

Here, artificial intelligence (Al) is a field of computer engineering and information technology for researching a method for allowing computers to do thinking, learning, self-development or the like that can be done by human intelligence, and may refer to a process of causing a computer to imitate human intelligent behavior.

In addition, AI does not exist on its own, but is rather directly or indirectly connected with other fields in computer science. In recent years, there have been extensive attempts to use AI for problem solving in the field of information technology.

Machine learning is an application of AI that gives computers the ability to automatically learn and improve from experience without explicit programs. In detail, machine learning is a technique for researching and building a system that performs learning based on empirical data, performs predictions, and improves its own performance, and algorithms therefor. The algorithms in machine learning may take a way of building specific models to derive predictions or decisions based on input data, rather than performing strictly defined static program instructions.

The user terminal 400 may access a data classification application and/or a data classification site provided by the data classification apparatus 100 to receive a data classification service.

The user terminal 400 may include a communication terminal capable of performing a function of a computing device (not shown), and may be, in addition to a desktop computer 401, a smart phone 403, and a notebook computer 404 that are operated by a user, a tablet personal computer (PC), a smart television (TV), a mobile phone, a personal digital assistant (PDA), a media player, a microserver, a global positioning system (GPS) device, an electronic book terminal, a digital broadcasting terminal, a navigation device, a kiosk, an MP3 player, a digital camera, a home appliance, and other mobile or non-mobile computing device, but is not limited thereto. Also, the user terminal 400 may be a wearable terminal, such as a watch, glasses, a hair band, or a ring, which has a communication function and a data processing function. The user terminal 400 is not limited to the above description, and may be any terminal capable of web browsing.

The network 500 may serve to connect the data classification apparatus 100, the loT sensor 300, and the user terminal 400 to each other. The network 500 may include, for example, a wired network, such as a local area network (LAN), a wide area network (WAN), a metropolitan area network (MAN), or an integrated services digital network (ISDN), or a wireless network, such as a wireless LAN (WLAN), code-division multiple access (CDMA), or satellite communication, but the scope of the present disclosure is not limited thereto. In addition, the network 500 may transmit and receive information by using short-range communication and/or long-range communication. Here, the short-range communication may include Bluetooth, radio-frequency identification (RFID), Infrared Data Association (IrDA), ultra-wideband (UWB), ZigBee, and Wi-Fi, and the long-range communication may include CDMA, frequency-division multiple access (FDMA), time-division multiple access (TDMA), orthogonal FDMA (OFDMA), and single-carrier FDMA (SC-FDMA).

The network 500 may include connection of network elements, such as hubs, bridges, routers, and switches. The network 500 may include one or more connected networks, for example, a multi-network environment, including a public network, such as the Internet, and a private network, such as a secure corporate private network. Access to the network 500 may be provided through one or more wired or wireless access networks.

Further, the network 500 may support controller area network (CAN), vehicle-to-infrastructure (V2I), vehicle-to-everything (V2X), wireless access in vehicular environment (WAVE), and an Internet-of-Things (loT) network and/or a narrowband IoT (NB-loT) network and/or 5G communication that allows distributed components, such as objects, to exchange and process information. Here, NB-loT is one of low-power/wide-area loT technologies using a Long-Term Evolution (LTE) frequency, and may be used for tracking, sensing, and meter reading that intermittently transmit low-capacity data.

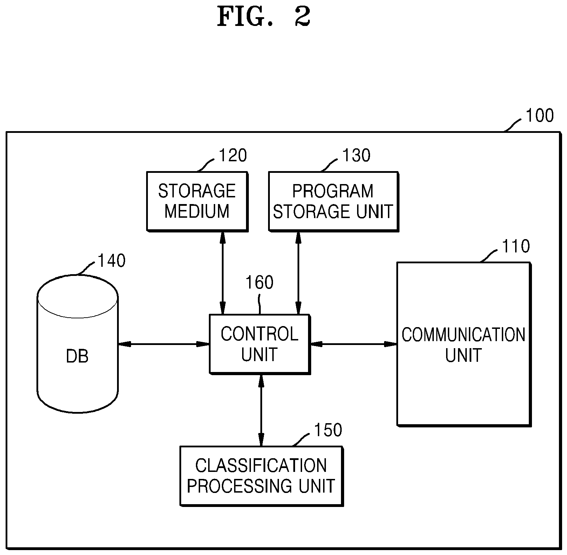

FIG. 2 is a block diagram schematically illustrating a configuration of a data classification apparatus according to an embodiment. In the following description, redundant descriptions provided above with reference to FIG. 1 are omitted. Referring to FIG. 2, the data classification apparatus 100 may include a communication unit 110, a storage medium 120, a program storage unit 130, a database 140, a classification processing unit 150, and a control unit 160.

The communication unit 110 may operate in conjunction with the network 500 to provide a communication interface necessary to provide, as packet data, signals transmitted/received between the data classification apparatus 100, the machine 200, the loT sensor 300, and the user terminal 400. Further, the communication unit 110 may serve to receive a certain information request signal from the user terminal 400, and transmit information processed by the classification processing unit 150 to the user terminal 400. Here, the communication interface is a medium that serves to connect the data classification apparatus 100 to the user terminal 400, and may include a path providing an access path to allow the user terminal 400 having accessed the data classification apparatus 100 to transmit and receive information. In addition, the communication unit 110 may be a device including hardware and software necessary for transmitting and receiving signals, such as control signals or data signals, through wired/wireless connection with other network devices.

The storage medium 120 performs a function of temporarily or permanently storing data processed by the control unit 160. Here, the storage medium 120 may include a magnetic storage medium or a flash storage medium, but the scope of the present disclosure is not limited thereto. The storage medium 120 may include an internal memory and/or an external memory, and may include a volatile memory, such as dynamic random-access memory (DRAM), static random-access memory (SRAM), or synchronous DRAM (SDRAM), nonvolatile memory such as a one-time programmable read-only memory (OTPROM), programmable read-only memory (PROM), erasable programmable read-only memory (EPROM), electrically erasable programmable read-only memory (EEPROM), mask read-only memory (ROM), flash ROM, NAND flash memory, or NOR flash memory, a flash drive such as a solid-state drive (SSD), a compact flash (CF) card, a Secure Digital (SD) card, a Micro-SD card, a Mini-SD card, an eXtreme Digital (XD) card, or a memory stick, or a storage device, such as a hard disk drive (HDD).

The program storage unit 130 stores control software for performing operations of collecting time-series sensor data from the loT sensor 300 provided in or installable in the machine 200, estimating a baseline by tracking base physical values of the loT sensor 300 from the time-series sensor data, identifying the zeroth state for the machine 200 from a result of the estimating of the baseline, generating first processed data in which the time-series sensor data is highlighted, generating, based on the first processed data, second processed data for determining the state of the machine 200, classifying the state of the machine 200 from the first processed data into one or more of the first state and the second state, based on the second processed data, measuring a similarity with respect to the first processed data included in a pattern section, and additionally classifying the state of the machine 200 from the first processed data included in the pattern section into one or more of the 2-1st state, the 2-2nd state, and the 2-3rd state, based on a result of the measuring of the similarity.

The database 140 may include a management database that stores information about the type and specification of the machine 200 and information about the type and specification of the loT sensor 300 provided in or installable in the machine 200. In addition, the management database may store time-series sensor data collected from the loT sensor 300 and data processed by the classification processing unit 150 for classifying the state of the machine 200.

In addition, the database 140 may include a user database that stores information of a user to be provided with a data classification service. Here, the information of the user may include basic information about the user, such as the user's name, affiliation, personal information, gender, age, contact information, email, address, or photo, information about user authentication (login), such as an identifier (ID) (or an e-mail) or a password, and access-related information, such as a country of access, a location of access, information about a device used for access, or a network environment of access.

Also, the user database may store the user's unique information, information and/or a category history provided to the user who accessed the data classification application or the data classification site, information about environment settings by the user, information about resources used by the user, billing and payment information with respect to the user's resource usage.

The classification processing unit 150 may collect time-series sensor data from the loT sensor 300 provided in or installable in the machine 200. The classification processing unit 150 may estimate a baseline by tracking base physical values of the loT sensor 300 from the time-series sensor data, and identify the zeroth state of the machine 200 from a result of the estimating of the baseline. The classification processing unit 150 may generate first processed data in which the time-series sensor data is highlighted. The classification processing unit 150 may generate, based on the first processed data, second processed data for determining the state of the machine 200. The classification processing unit 150 may classify the state of the machine 200 from the first processed data into one or more of the first state and the second state, based on the second processed data. The classification processing unit 150 may measure a similarity with respect to the first processed data included in the zeroth state to the second state, and further classify the state of the machine 200 from the first processed data included in the zeroth state to the second state, into one or more of the 2-1st state, the 2-2nd state, and the 2-3rd state, based on a result of the measuring of the similarity.

The control unit 160 is a central processing unit, and may control the overall operation of the data classification apparatus 100 by executing the control software stored in the program storage unit 130. The control unit 160 may include all types of devices capable of processing data, such as a processor. Here, the 'processor' may refer to a hardware-embedded data processing device having a physically structured circuitry to perform functions represented by code or instructions included in a program. Examples of the hardware-embedded data processing device may include a processing device, such as a microprocessor, a central processing unit (CPU), a processor core, a multiprocessor, an application-specific integrated circuit (ASIC), and a field-programmable gate array (FPGA), but the scope of the present disclosure is not limited thereto.

In the present embodiment, the control unit 160 may perform machine learning based on the time-series sensor data collected from the loT sensor 300 to classify the state of the machine 200, and the database 140 may store data used for the machine learning, result data, and the like.

A machine learning algorithm may be loaded in the control unit 160, and classification of the state information of the machine 200 may be performed based on machine learning using, as input data, the collected time-series sensor data of the loT sensor 300.

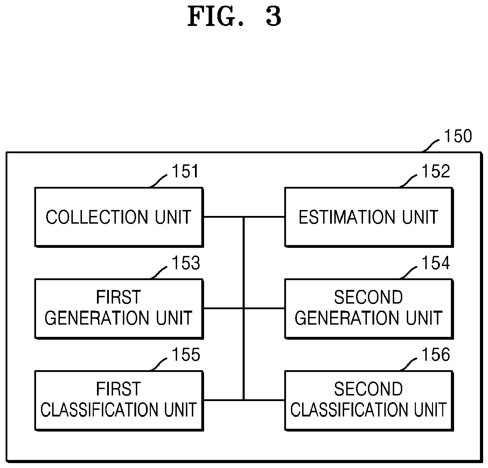

FIG. 3 is a block diagram schematically illustrating a configuration of a classification processing unit in the data classification apparatus of FIG. 2, and FIGS. 4 to 11 are graphs for describing data classification according to an embodiment. In the following description, redundant descriptions provided above with reference to FIG. 1 are omitted. Referring FIGS. 3 to 11, the classification processing unit 150 may include a collection unit 151, an estimation unit 152, a first generation unit 153, a second generation unit 154, a first classification unit 155, and a second classification unit 156.

The collection unit 151 may collect time-series sensor data from the loT sensor 300 provided in or installable in the machine 200. Here, the time-series sensor data may include a timestamp indicating information about a time point at which the loT sensor 300 sensed the machine 200, and a physical value obtained by the loT sensor 300 sensing the machine 200 at the time point of the timestamp.

FIG. 4 illustrates a graph of time-series sensor data collected from the loT sensor 300. Referring to FIG. 4, the x-axis may represent time, and the y-axis may represent physical values. When the loT sensor 300 is a current sensor, the x-axis may represent timestamps as time points at which the current sensor senses currents of the machine 200, and the y-axis may represent current values obtained by the current sensor sensing the machine 200 at the time points of the timestamps. It may be seen from FIG. 4 that the graph is divided into pattern sections in each of which a certain pattern is visualized, and non-pattern sections in each of which no pattern is visualized. Also, it may be seen that the pattern section repeats.

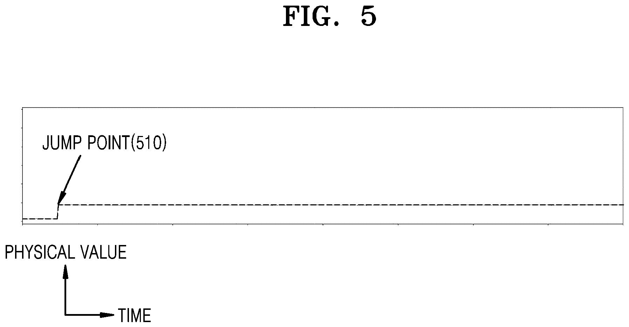

The estimation unit 152 may estimate a baseline from time-series sensor data collected from the loT sensor 300. Here, the baseline may refer to a line that follows base physical values obtained by the loT sensor 300 sensing the machine 200 that is not operating in sections in which the machine 200 is powered on or off. In the present embodiment, the baseline may be included in a non-pattern section. FIG. 5 is a graph showing a baseline estimated from the graph of the time-series sensor data of FIG. 4.

A general machine (e.g., a mixer) that is powered on and not operating may have a constant standby power consumption. Accordingly, the baseline may be generated by using the standby power consumption or that within an error range. Hence, it may be seen that the baseline is fixed.

However, the machine 200 according to the present embodiment is in a factory and the power consumption of the factory varies, and thus, it cannot be seen that the machine 200 has a constant standby power. Hence, it may be seen that the baseline is variable. Therefore, in order to accurately determine the first state of the machine 200, it is necessary to find the baseline. Accordingly, the estimation unit 152 may primarily estimate, as the baseline, a line following a base physical value of the loT sensor 300 among the time-series sensor data. On the other hand, when the standby power is constant, the baseline generated by using a standby power consumption within an error range may be used. When the standby power is constant, the estimation unit 152 according to the present embodiment may be omitted. The estimation unit 152 may identify the zeroth state of the machine 200 from a result of the estimating of the baseline. The data classification apparatus 100 may find a jump point 510 at which the physical value jumps from the estimated baseline. The estimation unit 152 may classify, as the zeroth state, the previous section from the point of occurrence of the jump point 510.

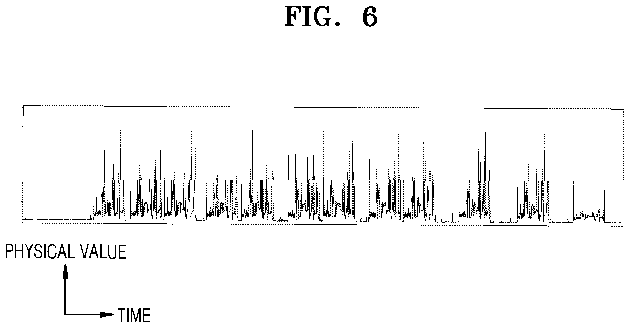

The first generation unit 153 may generate the first processed data in which the time-series sensor data is highlighted. The first generation unit 153 may generate sub-time-series sensor data by applying the estimated baseline to the time-series sensor data. Here, the sub-time-series sensor data may be regarded as a result of subtracting the estimated baseline from the time-series sensor data. FIG. 6 is a graph of sub-time-series sensor data as a result of subtracting an estimated baseline from time-series sensor data.

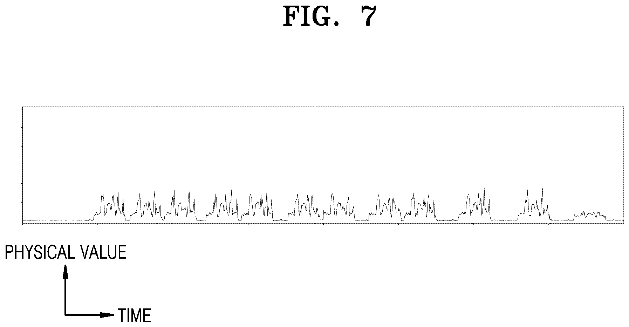

The first generation unit 153 may generate first processed data in which a pattern section of time-series sensor data is highlighted, by removing noise from the sub-time-series sensor data. FIG. 7 is a graph of first processed data generated by removing noise from sub-time-series sensor data.

In the present embodiment, the first generation unit 153 may apply various methods to generate the first processed data. In an embodiment, the first generation unit 153 may generate the first processed data by applying resampling to fix a sampling frequency with respect to the sub-time-series sensor data, downsampling to flatten the sub-time-series sensor data having the fixed frequency, and filtering to remove noise. In the present embodiment, a process, performed by the first generation unit 153, of generating the first processed data may be referred to as a preprocessing process.

When the state of the machine 200 is classified by simply using time-series sensor data without such a preprocessing process, the following issues may occur. In the present embodiment, the collection period of the loT sensor 300 may be set with a fixed interval between 1 millisecond (ms) and 100,000 seconds (s). However, an issue occurring in a data collection process, such as communication delay, may result in actual time-series sensor data being collected at irregular intervals. In addition, physical values obtained by the loT sensor 300 may contain fine noise, or noise due to characteristics of the machine 200. For example, in case of a CNC machine tool, noise, such as spikes, may occur, which is a clear hindrance from the point of view of data analysis.

Because the period of the time-series sensor data is not constant, the number of pieces of data included in a pattern section may vary, the physical values vary depending on the time point of data extraction for analysis, and noise may make it difficult to extract characteristics of the pattern section. Due to such issues, the accuracy of classification of the state of the machine 200 may significantly deteriorate. However, in the present embodiment, the accuracy of classification of the state of the machine 200 may be improved by solving the above-mentioned issues through the preprocessing process.

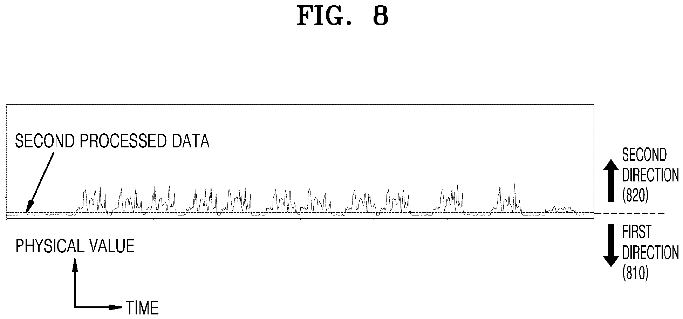

The second generation unit 154 may generate, based on the first processed data, second processed data for determining the state of the machine 200. Here, the second processed data may include a dynamic threshold for determining the first state and the second state with respect to the machine 200. The second generation unit 154 may generate the second processed data by using statistical characteristics (e.g., characteristics of a distribution function) and a higher-order differential (e.g., fourth-order differential) value with respect to the first processed data. FIG. 8 illustrates second processed data generated based on first processed data.

In the present embodiment, when the accurate baseline is found, it is unnecessary to find second processed data (a dynamic threshold). However, because the accurate baseline was unknown, the estimation unit 152 estimated the baseline. When the state of the machine 200 is classified by using the estimated baseline, classification accuracy may decrease, and second processed data may be generated to increase the classification accuracy.

In the present embodiment, the reason for using a dynamic threshold instead of a static threshold to generate the second processed data is as follows. In a model using a static threshold, when two or more different patterns exist in raw data, or when the baseline has a variability that exceeds a sensing error range of the loT sensor, the classification accuracy may significantly decrease. However, in the present embodiment, the accuracy of classification of the state of the machine 200 may be improved by solving the above-described issue through generation of the second processed data (the dynamic threshold).

The first classification unit 155 may classify the state of the machine 200 from the first processed data, based on the second processed data. Here, states of the machine 200 may include one or more of the first state and the second state. For example, the data classification apparatus 100 may classify, as the first state, the state of the machine 200 in data in a first direction (810 of FIG. 8) with respect to the second processed data. Also, the data classification apparatus 100 may classify, as the second state, the state of the machine 200 in data in a second direction (820 of FIG. 8) that is apart by 180 degrees from the first direction with respect to the second processed data.

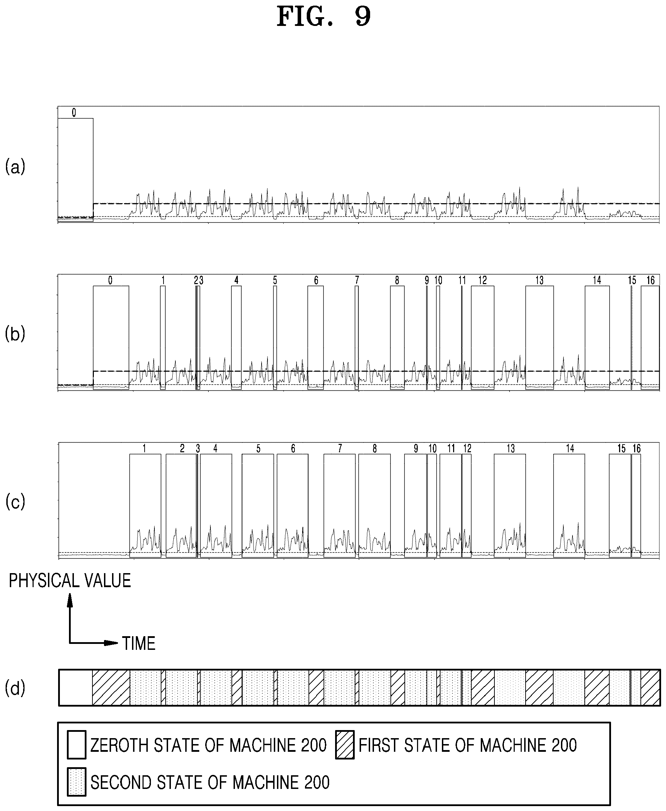

FIG. 9 illustrates a result of primary classification of the state of the machine 200 from the first processed data, based on the second processed data. In the present embodiment, the primary classification may include a result of classifying the state of the machine 200 into the zeroth state, the first state, and the second state.
(a) of FIG. 9 shows a section in which the machine 200 is classified as the zeroth state, from the first processed data. (b) of FIG. 9 shows a section in which the machine 200 is classified as the first state, from the first processed data. (c) of FIG. 9 shows a section in which the machine 200 is classified as the second state, from the first processed data. (d) of FIG. 9 collectively shows results of the primary classification.

In the present embodiment, the first classification unit 155 may classify the state of the machine corresponding to the first processed data by using a first machine learning classification model that receives an input of the first processed data and the second processed data and classifies the state of the machine.

The second classification unit 156 may further perform a series of data processing operations to improve the classification accuracy and subdivide the classification. Here, the series of data processing operations may include processing for measuring a similarity of the first processed data included in the zeroth state to the second state, by using a DTW technique. The second classification unit 156 may further classify the state of the machine from the first processed data included in the zeroth state to the second state, into one or more of the 2-1st state, the 2-2nd state, and the 2-3rd state, based on a result of the measuring of the similarity.

The second classification unit 156 may measure a similarity between a composite pattern generated by combining one or more continuous patterns with each other, and an adjacent pattern. The second classification unit 156 may cluster, into one group, two or more patterns having a similarity within an error range.

When, as a result of the clustering, the number of patterns included in any one group is greater than or equal to a preset number, the second classification unit 156 may classify, as the 2-1st state, the patterns included in the group. The patterns classified as the 2-1st state may be included in a first pattern section.

When, as a result of the clustering, the number of patterns included in another group is less than the preset number, the second classification unit 156 may classify, as the 2-2nd state, the patterns included in the group. Here, the second classification unit 156 may classify, as the 2-2nd state, patterns that are not included in any group after the clustering. The patterns classified as the 2-2nd state may be included in a second pattern section.

The second classification unit 156 may separately classify, as the 2-3rd state, patterns that were originally included in the first state but are included in the first pattern section through the DTW technique.

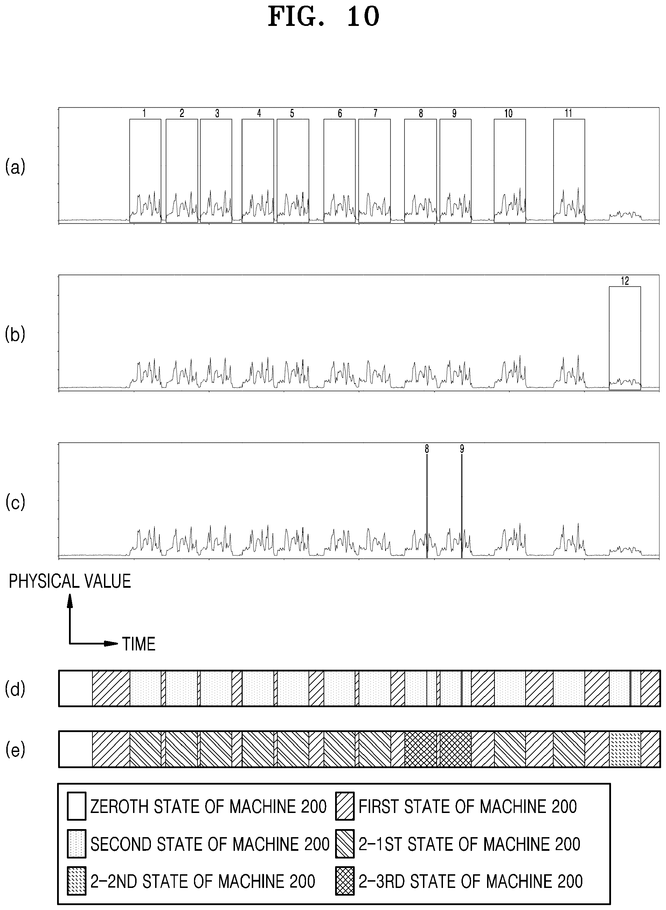

FIG. 10 illustrates a results of secondary classification of the state of the machine 200 by signal-processing first processed data included in a pattern section. In the present embodiment, the secondary classification may include a result of classifying the second state into the 2-1st state, the 2-2nd state, and the 2-3rd state.
(a) and (b) of FIG. 10 show results of applying a DTW technique to (c) of FIG. 9. By applying the DTW technique to sections corresponding to 2 and 3 of (c) of FIG.9, sections corresponding to 9 and 10 of (c) of FIG.9, sections corresponding to 11 and 12 of (c) of FIG.9, and sections corresponding to 15 and 16 of (c) of FIG.9, patterns corresponding to 1 to 12 of (a) and (b) of FIG. 10 may be generated.

The patterns corresponding to 1 to 11 of (a) of FIG. 10 are similar in shape and repeat more than a preset number of times (e.g., three times), and thus may be classified as the 2-1st state.

The pattern corresponding to 12 of (b) of FIG. 10 differs in shape from the patterns corresponding to 1 to 11 of (a) of FIG. 10, does not repeat more than the preset number of times, and thus may be classified as the 2-2nd state.

Patterns corresponding to 8 and 9 of (c) of FIG. 10 may correspond to patterns corresponding to 9 and 11 of (b) of FIG. 9, and may be patterns included in the first state. By measurement of a similarity using the DTW technique, the patterns corresponding to 8 and 9 of (c) of FIG. 10 were absorbed into the patterns corresponding to 8 and 9 of (a) of FIG. 10. Accordingly, the patterns corresponding to 8 and 9 of FIG. 10 were absorbed into the first pattern section from the first state, thus changed to the 2-1st state, and may be classified as the 2-3rd state.
(d) of FIG. 10 shows a result of primary classification, and (e) of FIG. 10 collectively shows result of secondary classification.

In the present embodiment, the second classification unit 156 may further classify the state of the machine 200 corresponding to first processed data included in the zeroth state to the second state, by using a second machine learning classification model that receives an input of the state of the machine 200 classified by using the first processed data included in a pattern section and a first machine learning classification model, and further classifies the state of the machine. Here, the second machine learning classification model may be an analysis model belonging to the unsupervised learning category.

Supervised learning-based analysis models that require data learning require preemptive training data and a period for learning pattern sections, and thus, after initial learning, the classification accuracy may be remarkably low when encountering a pattern different from those of the training data. However, in the present embodiment, the second machine learning classification model is an analysis model belonging to the unsupervised learning category, thus uses only characteristics of pattern sections existing in given data, does not require separate training data and a period for learning, is applicable to heterogeneous data, and may have improved classification accuracy as it does not depend on the shape of a pattern.

In the present embodiment, the classification processing unit 150 may classify the state of the machine 200 by applying the above-described primary classification and secondary classification to each piece of time-series sensor data.

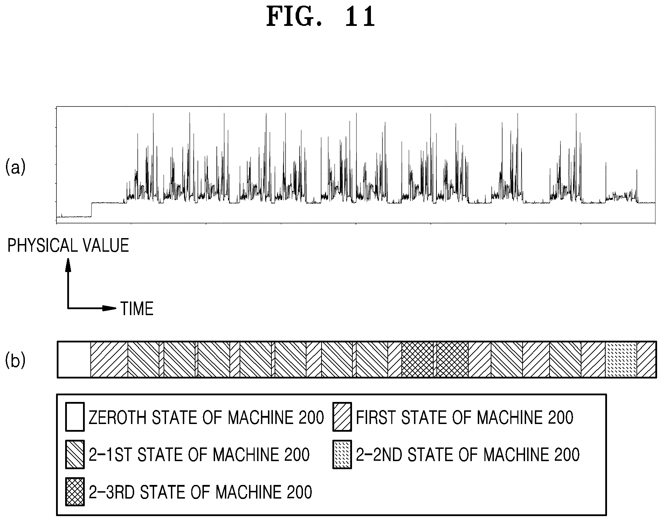

FIG. 11 illustrates results of primary classification and secondary classification of time-series sensor data as original data. Referring to FIG. 11, (a) shows the time-series sensor data as the original data illustrated in FIG. 4. (b) of FIG. 11 collectively shows results of the primary classification and the secondary classification of the original data.

The data classification apparatus 100 may apply the results of the primary classification and the secondary classification to the time-series sensor data that is the original data, to accurately classify which state of the machine 200 each piece of the time-series sensor data belongs to.

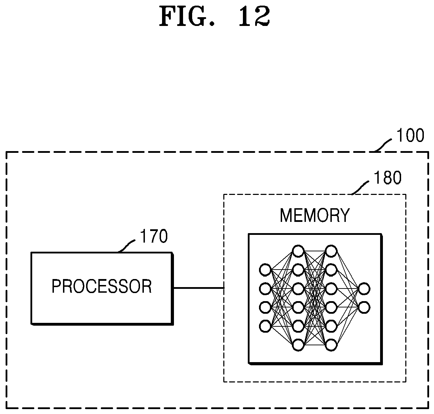

FIG. 12 is a block diagram schematically illustrating a configuration of a data classification apparatus according to another embodiment. In the following description, redundant descriptions provided above with reference to FIGS. 1 to 11 are omitted. Referring to FIG. 12, the data classification apparatus 100 according to another embodiment may include a processor 170 and a memory 180.

In the present embodiment, the processor 170 may process functions performed by the communication unit 110, the storage medium 120, the program storage unit 130, the database 140, the classification processing unit 150, and the control unit 160, which are illustrated in FIGS. 2 and 3.

The processor 170 may control the overall operation of the data classification apparatus 100. Here, the 'processor' may refer to a hardware-embedded data processing device having a physically structured circuitry to perform functions represented by code or instructions included in a program. Examples of the hardware-embedded data processing device may include a processing device, such as a microprocessor, a CPU, a processor core, a multiprocessor, an ASIC, and an FPGA, but the scope of the present disclosure is not limited thereto.

The memory 180 may be operatively connected to the processor 170 and may store at least one piece of code associated with an operation performed by the processor 170.

Also, the memory 180 may perform a function of temporarily or permanently storing data processed by the processor 170, and may include data constructed with the database 140. Here, the memory 180 may include a magnetic storage medium or a flash storage medium, but the scope of the present disclosure is not limited thereto. The memory 180 may include an internal memory and/or an external memory, and may include a volatile memory, such as DRAM, SRAM, or SDRAM, a nonvolatile memory such as OTPROM, PROM, EPROM, EEPROM, mask ROM, flash ROM, NAND flash memory, or NOR flash memory, a flash drive such as an SSD, a CF card, an SD card, a Micro-SD card, a Mini-SD card, an XD card, or a memory stick, or a storage device, such as an HDD.

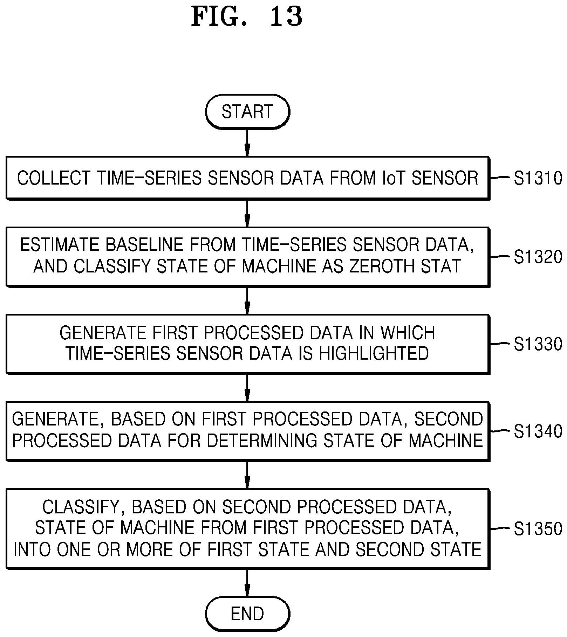

FIG. 13 is a flowchart for describing a data classification method according to an embodiment. In the following description, redundant descriptions provided above with reference to FIGS. 1 to 12 are omitted. The data classification method according to the present embodiment will be described on the assumption that the data classification method is performed by the processor 170 with the help of peripheral components of the data classification apparatus 100.

Referring to FIG. 13, in operation S1310, the processor 170 may collect time-series sensor data from the loT sensor 300 provided in or installable in the machine 200. Here, the time-series sensor data may include a timestamp indicating information about a time point at which the loT sensor 300 sensed the machine 200, and a physical value obtained by the loT sensor 300 sensing the machine 200 at the time point of the timestamp.

In operation S1320, the processor 170 may estimate a baseline by tracking base physical values of the loT sensor 300 from the time-series sensor data, and identify, from a result of the estimating of the baseline, the zeroth state included in a period in which the machine 200 is inactive. Here, the baseline may refer to a line that follows base physical values obtained by the loT sensor 300 sensing the machine 200 that is not operating in sections in which the machine 200 is powered on or off. In the present embodiment, the baseline may be included in a non-pattern section. In the present embodiment, when the standby power consumption is not constant, the estimating of the baseline may be performed, and when the standby power consumption is constant, the estimating of the baseline may be omitted, and a baseline generated by using a standby power consumption within an error range may be used.

In operation S1330, the processor 170 may generate first processed data in which the time-series sensor data is highlighted. Here, highlighting of time-series sensor data may include characterizing and thus clearly visualizing a pattern section in the time-series sensor data that includes non-pattern sections and pattern sections. The processor 170 may generate sub-time-series sensor data by applying the estimated baseline to the time-series sensor data. The processor 170 may generate the first processed data by removing noise from the sub-time-series sensor data.

In operation S1340, the processor 170 may generate, based on the first processed data, second processed data for determining the state of the machine. The processor 170 may generate the second processed data as a dynamic threshold for determining the first state and the second state for the machine by using statistical characteristics and a higher-order differential value with respect to the first processed data.

In operation S1350, the processor 170 may classify the state of the machine 200 from the first processed data, based on the second processed data. Here, states of the machine 200 may include one or more of the first state and the second state. The first state may refer to a state in which the machine 200 is active and the first processed data is included in a non-pattern section in which no pattern is visualized over a certain section. The second state may refer to a state in which the machine 200 is active and the first processed data is included in a pattern section in which an arbitrary pattern is visualized over a certain section. In the present embodiment, the processor 170 may classify the state of the machine 200 corresponding to the first processed data by using a first machine learning classification model that receives an input of the first processed data and the second processed data and classifies the state of the machine.

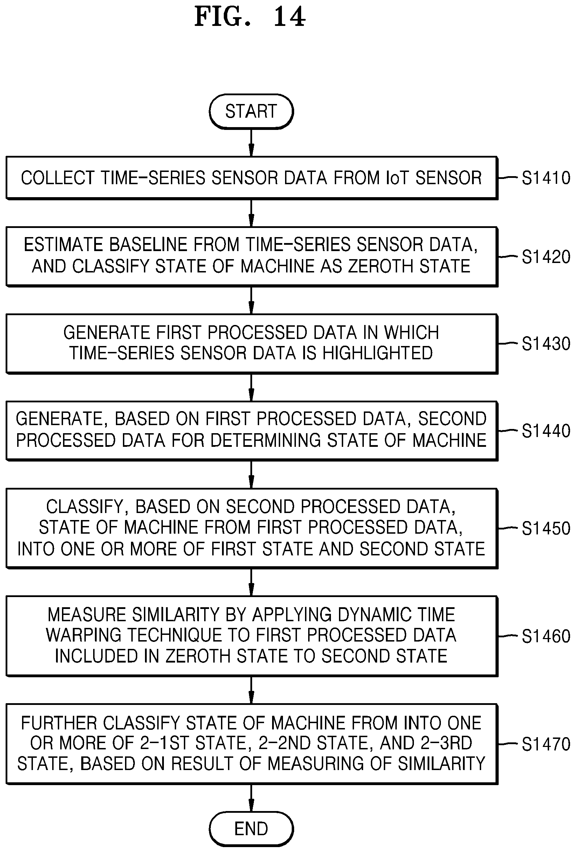

FIG. 14 is a flowchart for describing a data classification method according to another embodiment. In the following description, redundant descriptions provided above with reference to FIGS. 1 to 13 are omitted. The data classification method according to the present embodiment will be described on the assumption that the data classification method is performed by the processor 170 with the help of peripheral components of the data classification apparatus 100.

Referring to FIG. 14, in operation S1410, the processor 170 may collect time-series sensor data from the loT sensor 300 provided in or installable in the machine 200.

In operation S1420, the processor 170 may estimate a baseline by tracking base physical values of the loT sensor 300 from the time-series sensor data, and identify, from a result of the estimating of the baseline, the zeroth state included in a period in which the machine 200 is inactive.

In operation S1430, the processor 170 may generate first processed data in which the time-series sensor data is highlighted.

In operation S1440, the processor 170 may generate, based on the first processed data, second processed data for determining the state of the machine.

In operation S1450, the processor 170 may classify the state of the machine 200 from the first processed data into one or more of the first state and the second state, based on the second processed data.

In operation S1460, the processor 170 may measure a similarity by applying a DTW technique to the first processed data included in the zeroth state to the second state.

In operation S1470, the processor 170 may further classify the state of the machine 200 from the first processed data included in the zeroth state to the second state, into one or more of the 2-1st state, the 2-2nd state, and the 2-3rd state, based on a result of the measuring of the similarity. Here, the 2-1st state may refer to a state included in a first pattern section in which an arbitrary pattern included in the second state repeats a preset number of times or more and thus is visualized. The 2-2nd state may refer to a state included in a second pattern section in which an arbitrary pattern included in the second state repeats less than a preset number of times and thus is visualized. The 2-3rd state may refer to a state in which the first processed data included in the first state is changed to a first pattern section by using a DTW technique.

According to the present embodiment, with versatility applicable to a micro data structure collected from the loT sensor 300, data classification may be substantially performed with a device having relatively low computing power, and thus, costs may be reduced.

The embodiments of the present disclosure described above may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a compact disk ROM (CD-ROM) or a digital video disc (DVD), a magnetooptical medium, such as a floptical disk, and a hardware device specially configured to store and execute program instructions, such as ROM, RAM, or flash memory.

Meanwhile, the computer program may be specially designed and configured for the present disclosure or may be well-known to and be usable by those of ordinary skill in the art of computer software. Examples of the computer program may include not only machine code, such as code made by a compiler, but also high-level language code that is executable by a computer by using an interpreter or the like.

The term 'the' and other demonstratives similar thereto in the specification of the present disclosure (especially in the following claims) should be understood to include a singular form and plural forms. Furthermore, recitation of ranges of values herein are merely intended to serve as a shorthand method of referring individually to each separate value falling within the range, unless otherwise indicated herein, and each separate value is incorporated into the specification as if it were individually recited herein.

The operations of the methods described herein may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. In addition, various modifications, combinations, and adaptations will be readily apparent to those skilled in this art without departing from the following claims and equivalents thereof.

Accordingly, the spirit of the present disclosure should not be limited to the above-described embodiments, and all modifications and variations which may be derived from the meanings, scopes and equivalents of the claims should be construed as failing within the scope of the present disclosure.

### EXPLANATION OF REFERENCE NUMERALS DESIGNATING THE MAJOR ELEMENTS OF THE DRAWINGS

100: Data classification apparatus
200: Machine
300: Internet-of-Things (IoT) sensor
400: User terminal
500: Network

## Claims

1. A data classification method performed by a processor of a data classification apparatus, the data classification method comprising:
collecting time-series sensor data from an Internet-of-Things (IoT) sensor that is provided in or installable in a machine;
generating first processed data in which the time-series sensor data is highlighted;
generating, based on the first processed data, second processed data for determining a state of the machine; and
classifying the state of the machine from the first processed data, based on the second processed data,
wherein the state of the machine comprises one or more of a first state in which the machine is active and the first processed data is included in a non-pattern section in which no pattern is visualized over a certain section, and a second state in which the machine is active and the first processed data is included in a pattern section in which an arbitrary pattern is visualized over a certain section.

2. The data classification method of claim 1, wherein the collecting of the time-series sensor data comprises collecting the time-series sensor data including a timestamp indicating information about a time point at which the loT sensor sensed the machine, and a physical value obtained by the loT sensor sensing the machine at the time point of the timestamp.

3. The data classification method of claim 2, further comprising:
before the generating of the first processed data,
estimating a baseline by tracking a base physical value of the loT sensor from the time-series sensor data; and
identifying, from a result of the estimating of the baseline, a zeroth state included in a section in which the machine is inactive.

4. The data classification method of claim 3, wherein the generating of the first processed data comprises:
generating sub-time-series sensor data by applying, to the time-series sensor data, the result of the estimating of the baseline; and
generating the first processed data by removing noise from the sub-time-series sensor data.

5. The data classification method of claim 1, wherein the generating of the second processed data comprises generating the second processed data as a dynamic threshold for determining the first state and the second state for the machine by using statistical characteristics and a higher-order differential value of the first processed data.

6. The data classification method of claim 3, wherein the classifying of the state of the machine comprises classifying the state of the machine corresponding to the first processed data by using a first machine learning classification model that receives an input of the first processed data and the second processed data and classifies the state of the machine.

7. The data classification method of claim 6, further comprising:
after the classifying of the state of the machine,
measuring a similarity by applying a dynamic time warping (DTW) technique to the first processed data included in the pattern section; and
further classifying the state of the machine from the first processed data included in the pattern section, into one or more of a 2-1st state, a 2-2nd state, and a 2-3rd state, based on a result of the measuring of the similarity,
wherein the 2-1st state is a state included in a first pattern section in which an arbitrary pattern included in the second state repeats a preset number of times or more and thus is visualized,
the 2-2nd state is a state included in a first pattern section in which an arbitrary pattern included in the second state repeats less than the preset number of times and thus is visualized, and
the 2-3rd state is a state in which the first processed data included in the first state is changed to the first pattern section through the dynamic time warping technique.

8. The data classification method of claim 7, wherein the further classifying comprises further classifying the state of the machine corresponding to the first processed data included in the zeroth state to the second state, by using a second machine learning classification model that receives an input of the state of the machine classified by using the first processed data included in the pattern section and the first machine learning classification model, and further classifies the state of the machine.

9. A computer-readable recording medium having recorded thereon a computer program for executing, on a computer, the method of any one of claims 1 to 8.

10. A data classification apparatus comprising:
a processor; and
a memory operatively coupled to the processor and storing at least one piece of code to be executed by the processor,
wherein the memory stores code that, when executed by the processor, causes the processor to collect time-series sensor data from an Internet-of-Things (IoT) sensor that is provided in or installable in a machine, generate first processed data in which the time-series sensor data is highlighted, generate, based on the first processed data, second processed data for determining a state of the machine, and classify the state of the machine from the first processed data, based on the second processed data, and
the state of the machine comprises one or more of a first state in which the machine is active and the first processed data is included in a non-pattern section in which no pattern is visualized over a certain section, and a second state in which the machine is active and the first processed data is included in a pattern section in which an arbitrary pattern is visualized over a certain section.

11. The data classification apparatus of claim 10, wherein the memory further stores code that causes the processor to, when collecting the time-series sensor data, collect the time-series sensor data including a timestamp indicating information about a time point at which the loT sensor sensed the machine, and a physical value obtained by the loT sensor sensing the machine at the time point of the timestamp.

12. The image processing apparatus of claim 11, wherein the memory further stores code that causes the processor to, before the generating of the first processed data, estimate a baseline by tracking a base physical value of the loT sensor from the time-series sensor data, and identify, from a result of the estimating of the baseline, a zeroth state included in a section in which the machine is inactive.

13. The data classification apparatus of claim 12, wherein the memory further stores code that causes the processor to, when generating the first processed data, generate sub-time-series sensor data by applying, to the time-series sensor data, the result of the estimating of the baseline, and generate the first processed data by removing noise from the sub-time-series sensor data.

14. The data classification apparatus of claim 10, wherein the memory further stores code that causes the processor to, when generating the second processed data, generate the second processed data as a dynamic threshold for determining the first state and the second state for the machine by using statistical characteristics and a higher-order differential value of the first processed data.

15. The data classification apparatus of claim 12, wherein the memory further stores code that causes the processor to, after the classifying of the state of the machine, measure a similarity by applying a dynamic time warping technique to the first processed data included in the pattern section, and further classify the state of the machine from the first processed data included in the pattern section, into one or more of a 2-1st state, a 2-2nd state, and a 2-3rd state, based on a result of the measuring of the similarity, wherein
the 2-1st state is a state included in a first pattern section in which an arbitrary pattern included in the second state repeats a preset number of times or more and thus is visualized,
the 2-2nd state is a state included in a first pattern section in which an arbitrary pattern included in the second state repeats less than the preset number of times and thus is visualized, and
the 2-3rd state is a state in which the first processed data included in the first state is changed to the first pattern section through the dynamic time warping technique.
